# EUROPÄISCHE PATENTSCHRIFT

(11) **EP 3 266 663 B1**
(45) Veröffentlichungstag und Bekanntmachung des Hinweises auf die Patenterteilung: **20.03.2019**
(21) Anmeldenummer: 17178087.7
(22) Anmeldetag: 27.06.2017
(51) Int. Cl.: B60T 8/42

(54) **DRUCKMODULATOR FÜR EIN ABS-SYSTEM**
PRESSURE MODULATOR FOR AN ABS SYSTEM
MODULATEUR DE PRESSION POUR UN SYSTÈME ABS

(30) Priorität: 07.07.2016 DE 102016112491
(43) Veröffentlichungstag der Anmeldung: 10.01.2018
(73) Patentinhaber: Brake Force One GmbH, 72074 Tübingen (DE)
(72) Erfinder: Lauhoff, Jakob, 72070 Tübingen (DE)
(74) Vertreter: Kohler Schmid Möbus Patentanwälte

(56) Entgegenhaltungen:
- EP-A1- 0 580 382
- WO-A1-81/00697
- WO-A1-97/29934
- DE-A1- 2 854 574
- DE-B3-102014 007 717
- JP-A- S61 181 751

## Beschreibung

Die Erfindung betrifft einen Druckmodulator für ein ABS-System mit einem Gehäuse, das einen Hydraulikeingang und einen damit über eine hydraulische Leitung verbundenen Hydraulikausgang aufweist, wobei ein gegen eine Federkraft eines Federelements zu öffnender Volumenspeicher vorgesehen ist, der bei einer aktivierten Antiblockierfunktion das Volumen der hydraulischen Leitung vergrößert, wobei ein Linearantrieb mit einem Läuferstab vorgesehen ist und eine Verfahrbewegung des Läuferstabs das Öffnen des Volumenspeichers bewirkt, wobei sich das Federelement zumindest mittelbar an dem Gehäuse und dem Läuferstab abstützt.

Ein solcher Druckmodulator ist beispielsweise durch die DE 10 2014 007 717 B3 bekannt geworden.

Der dort offenbarte Druckmodulator weist eine relativ große Länge auf. Weiterhin ist ein Teil der hydraulischen Leitung relativ zum Gehäuse des Druckmodulators bewegbar, wodurch sich eine Störungsanfälligkeit ergeben kann.

Ein Druckmodulator mit den Merkmalen des Oberbegriffs des Patentanspruchs 1 ist aus der JP S 61181751 A bekannt. Die DE 28 54 574 A1 offenbart eine Antiblockiervorrichtung für Fahrzeugbremsen mit einem Zylinder, in dem ein elektromagnetisch betätigbares Sperrelement verschieblich gelagert ist und durch eine Vorspannvorrichtung in eine eine Flüssigkeitsströmung durch den Zylinder ermöglichende Stellung geführt ist. Beim Einschalten eines Elektromagneten erfolgt eine Verlagerung des Sperrelements. Der Flüssigkeitsdruck auf der Radbremszylinderseite verringert sich und eine Flüssigkeitsströmung durch den Zylinder wird gesperrt.

Aufgabe der vorliegenden Erfindung ist es, einen Druckmodulator für ein ABS-System, insbesondere für ein ABS-System eines Zweirads, bereitzustellen, der besonders klein bauend und funktionssicher ist.

Gelöst wird diese Aufgabe erfindungsgemäß durch einen Druckmodulator für ein ABS-System mit den Merkmalen des Anspruchs 1. Dadurch, dass das Federelement in dem Läuferstab angeordnet ist, kann das Gehäuse etwa um die Länge des Federelements verkürzt werden. Dadurch ergibt sich ein im Vergleich zum Stand der Technik klein bauender, insbesondere kürzerer Druckmodulator. Außerdem kann durch die erfindungsgemäße Anordnung vermieden werden, dass ein Teil der Hydraulikleitung relativ zum Gehäuse des Druckmodulators bewegbar ist. Dadurch wird die Funktionssicherheit des Druckmodulators erhöht. Außerdem kann die Anzahl dynamischer Abdichtungen verringert werden.

Der kompakten Ausgestaltung des Druckmodulators förderlich ist es zudem, dass ein in den Läuferstab ragender fest mit dem Gehäuse verbundener Steuerkolben vorgesehen ist, an dem sich das Federelement abstützt. Der Steuerkolben, das Federelement und der Läuferstab sind vorzugsweise koaxial angeordnet. Die Länge des Steuerkolbens und des komprimierten Federelements können im Wesentlichen der Länge des Läuferstabs entsprechen.

Weitere Vorteile ergeben sich, wenn der Druckmodulator genau eine dynamische Dichtung aufweist, die vorzugsweise zwischen dem Läuferstab und dem Steuerkolben wirkt. Die Funktionssicherheit kann erhöht werden, wenn wenige dynamische Dichtungen vorgesehen sind.

Der Steuerkolben kann als Hohlkörper ausgebildet sein. Dadurch ist es insbesondere möglich, Hydraulikflüssigkeit, die in das Innere des Läuferstabs gelangt, beispielsweise durch eine Schleppleckage im Bereich der dynamischen Dichtung, abzuführen. In diesem Zusammenhang ist es vorteilhaft, wenn der Steuerkolben mit einem verschließbaren Flüssigkeitsablass verbunden ist. Der Flüssigkeitsablass kann beispielsweise in einer Stirnseite des Gehäuses vorgesehen sein.

Besondere Vorteile ergeben sich, wenn der Läuferstab von Hydraulikmedium umströmbar in der hydraulischen Leitung angeordnet ist. Insbesondere kann der Läuferstab im Gehäuse geführt sein und kann die Hydraulikflüssigkeit eine Schmierung des Läuferstabs bewirken, sodass dieser verschleiß- und reibungsarm im Gehäuse bewegbar ist. Insbesondere kann das Hydraulikmedium über das Führungsspiel zwischen dem Läuferstab und einer Führungsbuchse durchgeführt sein.

Weiterhin kann vorgesehen sein, dass der Läuferstab zumindest eine Hydraulikfluidausnehmung aufweist, insbesondere an seiner Mantelfläche zumindest eine sich in Längsrichtung des Läuferstabs oder wendelförmig erstreckende Rille aufweist. Somit kann Hydraulikflüssigkeit über die Rille entlang des Läuferstabs fließen. Alternativ oder zusätzlich ist es denkbar, dass der Läuferstab in Längsrichtung des Läuferstabs ausgerichtete Durchgangsöffnungen aufweist, durch die hindurch Hydraulikflüssigkeit vom Hydraulikeingang zum Hydraulikausgang des Druckmodulators fließen kann.

Gemäß einer besonders vorteilhaften Ausgestaltung der Erfindung kann vorgesehen sein, dass in der hydraulischen Leitung eine durch den Läuferstab betätigbare Ventilanordnung vorgesehen ist. Insbesondere kann das Ventil durch den Läuferstab geöffnet werden, wenn dieser sich in einer Ausgangsstellung befindet, d. h. durch das Federelement bis zu einem definierten Maximaldruck in eine vorgegebene Stellung gedrückt wird. Dadurch kann der Läuferstab beispielsweise gegen eine, insbesondere federbeaufschlagte, Kugel eines Rückschlagventils drücken und dadurch das Ventil öffnen. Wird dagegen die Antiblockierfunktion aktiviert und der Läuferstab entgegen der Federkraft des Federelements bewegt, wird der Kontakt zwischen dem Läuferstab und der Kugel des Ventils aufgelöst, sodass die Kugel das Ventil verschließt und ein weiteres Nachführen von Hydraulikflüssigkeit durch einen Geberzylinder verhindert wird. Durch eine so ausgeführte Ventilanordnung ist nur ein einziges Ventil im Druckmodulator notwendig. Als Alternative zur Kugel wäre auch ein Bauteil mit darauf angebrachter Dichtung denkbar, welches eine Bohrung zwischen hydraulischem Eingang und dem Läuferstab verschließt.

In dem Gehäuse kann eine Elektronikschaltung angeordnet sein. Insbesondere kann die Elektronikschaltung in den Druckmodulator voll integriert sein. Somit kann die Elektronikschaltung, die zur Ansteuerung des Linearantriebs dient, in dem Druckmodulator vorgesehen sein. Es ergibt sich damit eine besonders platzsparende Anordnung. Somit können alle zeitkritischen Signale, Berechnungen, Leistungsendstufen usw. innerhalb des Druckmodulators erzeugt bzw. vorhanden sein, sodass weniger sicherheitstechnische und zeitkritische Signalverbindungen notwendig sind.

Weiterhin kann ein den Druck im Volumenspeicher erfassender Drucksensor vorgesehen sein. Der Drucksensor kann über eine direkte hydraulische Anbindung mit dem Volumenspeicher verbunden sein. Dies ist eine kostengünstige, leichte Lösung, die wenig Platz benötigt.

Dabei kann der Drucksensor auf einer die Elektronikschaltung aufweisenden Platine angeordnet sein. Der Drucksensor kann insbesondere in SMD-Bauweise besonders kostengünstig direkt auf der Platine integriert sein.

Durch die Integration der Platine in das robuste metallische Gehäuse des Druckmodulators wird sie neben Umwelteinflüssen wie Dreck, Wasser, Staub auch vor EMV-Störungen wie Abstrahlungen von anderen Steuergeräten, Motoren oder Ähnlichem geschützt. Die Integration von Drucksensor, Beschleunigungssensor und Microcontroller verhindert auch eine Störung der Signale durch Magnetfelder, da Signalwege zwischen Sensor und Controller quasi nicht mehr vorhanden sind.

Auch wird das Umfeld des Druckmodulators durch die Integration in das metallische Gehäuse vor der Abstrahlung des Druckmodulators und dessen Elektronik geschützt. So lassen sich Anforderungen an EMV-Verträglichkeit leichter umsetzen.

Die Elektronikschaltung kann in einer separaten Kammer des Gehäuses und dadurch geschützt vor Hydraulikflüssigkeit angeordnet sein. Insbesondere kann sich die elektronische Schaltung axial neben dem Volumenspeicher befinden. Damit Hydraulikflüssigkeit in den Volumenspeicher gelangen kann, kann die hydraulische Leitung durch die Elektronikschaltung, insbesondere die Platine der Elektronikschaltung, hindurchgeführt sein. Mögliche Positionen sind dabei einerseits eine Anordnung zwischen hydraulischem Eingang und Volumenspeicher oder zwischen Volumenspeicher und hydraulischem Ausgang.

In den Rahmen der Erfindung fällt außerdem eine hydraulische Bremsanlage mit Antiblockierfunktion, umfassend einen den hydraulischen Druck erzeugenden Geberzylinder, der über eine hydraulische Leitung, in der ein erfindungsgemäßer Druckmodulator angeordnet ist, mit einer Radbremse hydraulisch kommunizierend verbunden ist.

Auch denkbar wäre, sowohl hydraulischen Eingang und Ausgang und Elektronikschaltung auf einer Seite anzubringen. Dies kann zweckmäßig sein, wenn am Fahrzeug alle Leitungen aus der gleichen Richtung zum Aktuator geführt werden. Dies ist z. B. der Fall, wenn der Aktuator im Inneren der Karosserie "versteckt" werden soll. In dem Fall sind dann aber zwei hydraulische Durchführungen durch die Elektronikschaltung erforderlich.

Durch die Anordnung der Elektronikschaltung im Inneren des Gehäuses ist diese gut geschützt. Auf ein zusätzliches Gehäuse für die Elektronikschaltung kann verzichtet werden.

Das Gehäuse des Druckmodulators kann eine zylindrische Außenform aufweisen, sodass eine einfache Montage an einem Fahrzeug, beispielsweise über Schellen oder über Einschieben in Rohre, erfolgen kann. Dies erleichtert es zudem, das Gehäuse mittels O-Ringen gegen Außeneinflüsse kostengünstig abzudichten.

In der schematischen Zeichnung ist ein Ausführungsbeispiel der Erfindung dargestellt und in der nachfolgenden Beschreibung näher erläutert.

Es zeigen:
- Fig. 1: eine schematische Darstellung einer hydraulischen Bremsanlage mit Antiblockierfunktion für ein Zweirad;
- Fig. 2a: einen Druckmodulator, in dem in einer perspektivischen Schnittansicht die für die Antiblockierfunktion notwendigen Teile integriert sind, bei nicht aktivierter ABS-Funktion;
- Fig. 2b: ein Detail A der Fig. 2a;
- Fig. 3a: eine der Fig. 2a entsprechende Darstellung bei aktivierter ABS-Funktion;
- Fig. 3b: ein Detail B der Fig. 3a;
- Fig. 4: einen vergrößerten Ausschnitt des Druckmodulators in einer Schnittdarstellung; und
- Fig. 5: einen Läuferstab.

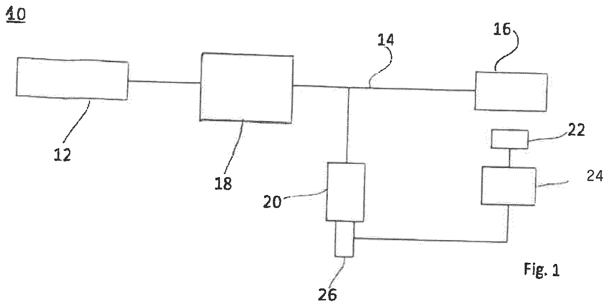

Fig. 1 zeigt eine insgesamt mit dem Bezugszeichen 10 bezeichnete Bremsanlage mit Antiblockierfunktion für ein Elektrofahrrad.

Die hydraulische Bremsanlage 10 umfasst einen, z.B. über einen Bremshebel, betätigbaren Geberzylinder 12, der über eine hydraulische Leitung 14 hydraulisch kommunizierend mit einer Radbremse 16 verbunden ist. Über den Geberzylinder 12 ist in bekannter Art und Weise der für das Ansprechen der Radbremse 16 notwendige hydraulische Druck erzeugbar.

Wie Fig. 1 weiter zeigt, ist stromabwärts vom Geberzylinder 12 eine Ventilanordnung 18 angeordnet. Weiterhin weist die hydraulische Bremsanlage 10 einen gegen eine Federkraft eines Federelements zu öffnenden Volumenspeicher 20, einen Drehzahlsensor 22 sowie ein Steuergerät 24 auf.

In der schematischen Darstellung gemäß Fig. 1 wurde auf eine Darstellung des Federelements des Volumenspeichers 20 verzichtet. Das Federelement ist vorliegend so dimensioniert, dass die resultierende Federkraft größer als eine durch den Geberzylinder 12 erzeugbare hydraulische Kraft ist.

Wie Fig. 1 weiter zu entnehmen ist, weist die hydraulische Bremsanlage 10 zudem einen über das Steuergerät 24 ansteuerbaren elektrischen Antrieb 26 auf, der wiederum mit dem Federelement des Volumenspeichers in Wirkverbindung steht. Der elektrische Antrieb 26, das Steuergerät 24 und Drehzahlsensor 22 sind über entsprechende Kommunikationsleitungen miteinander verbunden. Der elektrische Antrieb 26 steht dabei derart mit dem Federelement des Volumenspeichers 20 in Wirkverbindung, dass eine aktive Rückstellung des Federelements und damit das Öffnen des Volumenspeichers bewirkbar ist.

Nachfolgend zur Funktionsweise der hydraulischen Bremsanlage 10:
Sobald das Steuergerät 24 mittels des Drehzahlsensors 22 das Blockieren der Räder erkennt, wird der elektrische Antrieb 26 angesteuert, der daraufhin den Volumenspeicher 20 gegen die Federkraft des Federelements öffnet; zeitgleich wird mechanisch oder elektrisch die Ventilanordnung 18 geschlossen.

Somit ist der Geberzylinder 12 von der Radbremse 16 hydraulisch getrennt, d. h. ein Fahrer kann den Druck 10 im Bremssattel nicht weiter erhöhen, da der Griff quasi abgeklemmt ist.

Durch das Öffnen des Volumenspeichers 20 ist das Volumen in der hydraulischen Leitung 14 vergrößert, sodass der hydraulische Druck in der Bremsanlage 10 sinkt.

Mittels des elektrischen Antriebs 26 kann somit der Druck so lange geregelt werden, bis die Fahrstabilität auch ohne Antiblockierfunktion sichergestellt ist. Anschließend wird der Volumenspeicher 20 geschlossen und die Ventilanordnung 18 wird wieder geöffnet, sodass die Bremsanlage 10 wieder ganz normal arbeitet.

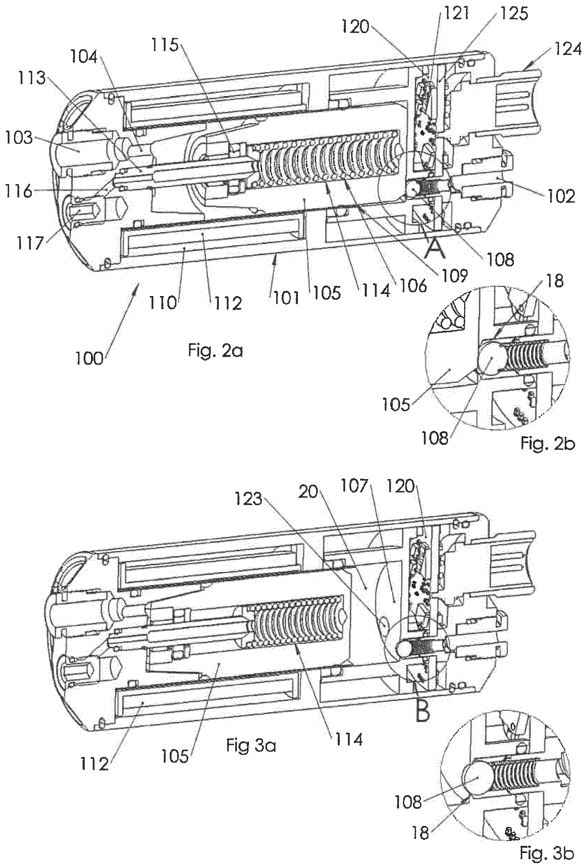

Die Fig. 2a zeigt einen erfindungsgemäßen Druckmodulator 100. Der Druckmodulator 100 umfasst ein Gehäuse 101 mit einem Hydraulikeingang 102 und einem Hydraulikausgang 103. Der Hydraulikeingang 102 und der Hydraulikausgang 103 sind durch eine Hydraulikleitung 104, die Bestandteil der Hydraulikleitung 14 ist, miteinander verbunden.

Die hydraulischen Ein- und Ausgänge 102, 103 können über Steckverbinder realisiert werden, um im Servicefall eine einfache und werkzeuglose Montage/Demontage zu ermöglichen.

Bei nicht aktivierter ABS-Funktion befindet sich ein Läuferstab 105 in einer in der Fig. 2a gezeigten Nullstellung. Der Läuferstab 105 ist aufgrund der Federkraft des Federelements 106 nach rechts bewegt, sodass er an einer Gehäusewand 107 (s. Fig. 3a, die die Situation bei aktivierter ABS-Funktion zeigt) anliegt. In dieser Stellung (s. vergrößerte Darstellung gemäß Fig. 2b) drückt der Läuferstab 105 gegen ein als Kugel ausgebildetes Ventilelement 108 der Ventilanordnung 18, sodass die Ventilanordnung 18 geöffnet ist und Hydraulikflüssigkeit die Ventilanordnung 18 durchströmen kann. Die Hydraulikflüssigkeit kann dann weiterhin entlang eines Spalts zwischen der Mantelfläche des Läuferstabs 105 und der Gehäusewand 109 zum Hydraulikausgang 103 fließen.

Bei aktivierter Antiblockierfunktion wird der als Linearantrieb 110 ausgebildete elektrische Antrieb 26 aktiviert, der den Läuferstab 105 in die in der Fig. 3a gezeigte Stellung entgegen der Federkraft des Federelements 106 bewegt. Dadurch wird der Volumenspeicher 20 geöffnet. Das Volumen der Hydraulikleitung 104 wird demnach vergrößert, sodass der durch die Hydraulikflüssigkeit auf eine Radbremse ausgeübte Druck geringer wird und die Radbremse geöffnet wird. Das Verschieben des Läuferstabs 105 in die in der Fig. 3a gezeigte Stellung hat weiterhin den Effekt, dass das Ventilelement 108 nach links bewegt wird und somit die Ventilanordnung 18 verschließt, s. Darstellung in der Fig. 3b. Ein Geberzylinder ist somit von der Radbremse abgekoppelt.

Der Linearantrieb 110 weist eine zylinderförmige Spulenanordnung 112 auf, durch die der Läuferstab 105 angezogen werden kann.

Das Federelement 106 stützt sich einenends an dem Läuferstab 105 und anderenends an einem Steuerkolben 113 ab, der fest mit dem Gehäuse 101 verbunden ist. Das Federelement stützt sich somit mittelbar über den Steuerkolben 113 am Gehäuse 101 ab. Bei einer Verlagerung des Läuferstabs 105 nach links gemäß Fig. 3a wird demnach das Volumen 114 im Bereich des Federelements 106 im Läuferstab 105 verkleinert, die darin befindliche Luft wird komprimiert.

Der Läuferstab 105 ist gegenüber dem Steuerkolben 113 über eine dynamische Dichtung 115 abgedichtet. Gelangt dennoch Hydraulikflüssigkeit aufgrund von Schleppleckage in das Innere des Läuferstabs 105, so kann dies zu einem Ausfall des Systems führen. Um die Flüssigkeit abführen zu können, ist daher der Steuerkolben 113 hohl ausgebildet und steht mit einem verschließbaren Flüssigkeitsauslass 116 in Verbindung. Insbesondere ist der Flüssigkeitsauslass 116 durch eine Schraube 117 verschließbar.

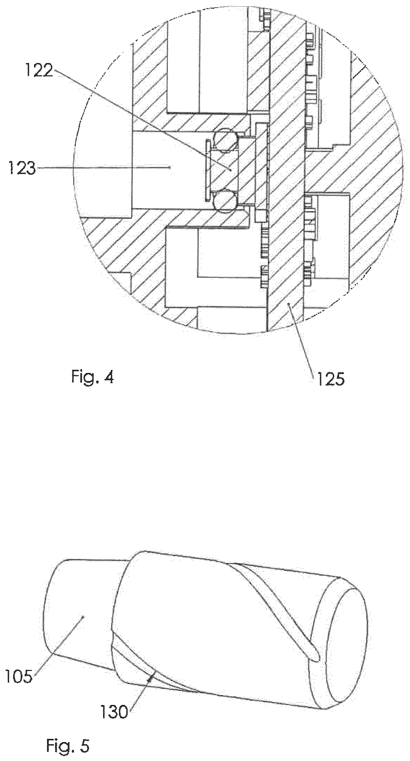

Im Gehäuse 101 ist eine Gehäusekammer 120 vorgesehen, die sich in axialer Richtung unmittelbar an den Volumenspeicher 20 anschließt. In der Gehäusekammer 120 ist eine Elektronikschaltung 121, die das Steuergerät 24 darstellt, vorgesehen. Diese Elektronikschaltung 121 ist somit vollständig in den Druckmodulator 100 integriert. Sie kann einen Beschleunigungssensor, Mikrocontroller und Leistungsendstufen aufweisen. Weiterhin weist die Elektronikschaltung 121 einen Drucksensor 122 (s. Fig. 4) auf, der direkt hydraulisch an den Volumenspeicher 20 angebunden ist. Zu diesem Zweck weist die Gehäusewandung 107 eine Durchgangsöffnung 123 auf, s. Fig. 3a, 4.

Eine zusätzliche oder zum Drucksensor alternative Positionserfassung des Läuferstabs 105, z. B. mittels Hallsensor, ist denkbar.

Weiterhin ist eine elektrische Anbindung 124 zur Übertragung von Steuersignalen, zur Kommunikation mit einer externen Sensorik, insbesondere dem Drehzahlsensor 22, und eine Stromversorgung, vorgesehen.

Die hydraulische Leitung 104 ist im Bereich der Ventilanordnung 18 durch die Elektronikschaltung 121 hindurchgeführt. Die Elektronikschaltung 121 weist eine Platine 125 auf, auf der auch der Drucksensor 122 angeordnet ist.

Die Elektronikschaltung 121 ist in der Kammer 120 geschützt angeordnet. Ein separates Gehäuse muss nicht vorgesehen werden. Sicherheitskritische und zeitkritische Signale werden somit im Druckmodulator 100 erzeugt und bereitgestellt.

Fig. 5 zeigt einen Läuferstab 105 mit auf seiner Mantelfläche ausgebildeten wendelförmigen Rillen 130, die den Durchfluss von Hydraulikflüssigkeit erlauben. Alternativ könnten die Rillen 130 auch parallel zur Längsachse des Läuferstabs 105 verlaufen. Die Rillen 130 können in beliebiger Anzahl und Form vorgesehen sein.

## Patentansprüche

1. Druckmodulator (100) für ein ABS-System mit einem Gehäuse (101), das einen Hydraulikeingang (102) und einen damit über eine hydraulische Leitung (104) verbundenen Hydraulikausgang (103) aufweist, wobei ein gegen eine Federkraft eines Federelements (106) zu öffnender Volumenspeicher (20) vorgesehen ist, der bei einer aktivierten Antiblockierfunktion das Volumen der hydraulischen Leitung (104) vergrößert, wobei ein Linearantrieb (110) mit einem Läuferstab (105) vorgesehen ist und eine Verfahrbewegung des Läuferstabs (105) das Öffnen des Volumenspeichers (20) bewirkt, wobei sich das Federelement (106) zumindest mittelbar an dem Gehäuse (101) und dem Läuferstab (105) abstützt, wobei das Federelement (106) in dem Läuferstab (105) angeordnet ist, **dadurch gekennzeichnet, dass** ein in den Läuferstab (105) ragender fest mit dem Gehäuse (101) verbundener Steuerkolben (113) vorgesehen ist, an dem sich das Federelement (106) abstützt.

2. Druckmodulator nach Anspruch 1, **dadurch gekennzeichnet, dass** der Druckmodulator (100) genau eine dynamische Dichtung (115) aufweist.

3. Druckmodulator nach einem der vorhergehenden Ansprüche, **dadurch gekennzeichnet, dass** der Steuerkolben (113) als Hohlkörper ausgebildet ist.

4. Druckmodulator nach einem der vorhergehenden Ansprüche, **dadurch gekennzeichnet, dass** der Steuerkolben (113) mit einem verschließbaren Flüssigkeitsablass (116) verbunden ist.

5. Druckmodulator nach einem der vorhergehenden Ansprüche, **dadurch gekennzeichnet, dass** der Läuferstab (105) von Hydraulikmedium umströmbar in der hydraulischen Leitung (104) angeordnet ist.

6. Druckmodulator nach einem der vorhergehenden Ansprüche, **dadurch gekennzeichnet, dass** der Läuferstab (105) zumindest eine Hydraulikfluidausnehmung aufweist, insbesondere an seiner Mantelfläche zumindest eine sich in Längsrichtung des Läuferstabs (105) oder wendelförmig (130) erstreckende Rille aufweist.

7. Druckmodulator nach einem der vorhergehenden Ansprüche, **dadurch gekennzeichnet, dass** in der hydraulischen Leitung (104) eine durch den Läuferstab (115) betätigbare Ventilanordnung (18) vorgesehen ist.

8. Druckmodulator nach einem der vorhergehenden Ansprüche, **dadurch gekennzeichnet, dass** in dem Gehäuse (101) eine Elektronikschaltung (121) angeordnet ist.

9. Druckmodulator nach einem der vorhergehenden Ansprüche, **dadurch gekennzeichnet, dass** ein den Druck im Volumenspeicher (20) erfassender Drucksensor (122) vorgesehen ist.

10. Druckmodulator nach Ansprüchen 8 und 9 **dadurch gekennzeichnet, dass** der Drucksensor (122) auf einer die Elektronikschaltung (121) aufweisenden Platine (125) angeordnet ist.

11. Druckmodulator nach zumindest einem der vorhergehenden Ansprüche 8 oder 10, **dadurch gekennzeichnet, dass** die hydraulische Leitung (104) durch die Elektronikschaltung (121) hindurchgeführt ist.

12. Hydraulische Bremsanlage (10) mit Antiblockierfunktion, umfassend einen den hydraulischen Druck erzeugenden Geberzylinder (12), der über eine hydraulische Leitung (14), in der ein Druckmodulator (100) nach einem der vorhergehenden Ansprüche angeordnet ist, mit einer Radbremse (16) hydraulisch kommunizierend verbunden ist.

## Claims

1. Pressure modulator (100) for an anti-lock braking system (ABS), comprising a casing (101) having a hydraulic input (102) and a hydraulic output (103) connected thereto via a hydraulic line (104), wherein a volume accumulator (20) designed to be opened against the spring force of a spring element (106) is provided, said volume accumulator increasing the volume of the hydraulic line (104) when an anti-lock function is activated, wherein a linear drive (110) comprising a rotor bar (105) is provided and displacement of the rotor bar (105) effects opening of the volume accumulator (20), wherein the spring element (106) is supported at least indirectly on the casing (101) and the rotor bar (105) and wherein the spring element (106) is arranged in the rotor bar (105), **characterised by** a control piston (113) rigidly connected to the casing (101) and projecting into the rotor bar (105), the spring element (106) being supported on said control piston.

2. Pressure modulator according to claim 1, **characterised in that** the pressure modulator (100) has precisely one dynamic seal (115).

3. Pressure modulator according to one of the preceding claims, **characterised in that** the control piston (113) is designed as a hollow part.

4. Pressure modulator according to one of the preceding claims, **characterised in that** the control piston (113) is connected to a closable fluid outlet (116).

5. Pressure modulator according to one of the preceding claims, **characterised in that** the rotor bar (105) is arranged in the hydraulic line (104) in such a manner that hydraulic medium can flow around it.

6. Pressure modulator according to one of the preceding claims, **characterised in that** the rotor bar (105) has at least one hydraulic fluid recess, in particular is provided on its lateral surface with at least one groove extending in the longitudinal direction of the rotor bar (105) or extending helically (130).

7. Pressure modulator according to one of the preceding claims, **characterised in that** a valve arrangement (18) that can be actuated by the rotor bar (105) is provided in the hydraulic line (104).

8. Pressure modulator according to one of the preceding claims, **characterised in that** an electronic circuit (121) is arranged in the casing (101).

9. Pressure modulator according to one of the preceding claims, **characterised by** a pressure sensor (122) detecting the pressure in the volume accumulator (20).

10. Pressure modulator according to claims 8 and 9, **characterised in that** the pressure sensor (122) is arranged on a printed circuit board (125) comprising the electronic circuit (121).

11. Pressure modulator according to at least one of the preceding claims 8 or 10, **characterised in that** the hydraulic line (104) is led through the electronic circuit (121).

12. Hydraulic brake system (10) with an anti-lock function, comprising a master cylinder (12) generating the hydraulic pressure, said master cylinder communicating hydraulically with a wheel brake (16) via a hydraulic line (14) in which a pressure modulator (100) according to one of the preceding claims is arranged.

## Revendications

1. Modulateur de pression (100) pour un système de freinage antiblocage avec un carter (101), qui comporte une entrée hydraulique (102) et une sortie hydraulique (103) reliée à celle-ci par l'intermédiaire d'une conduite hydraulique (104),
dans lequel il est prévu un accumulateur volumique (20) qui doit être ouvert contre une force élastique d'un élément faisant ressort (106) et qui augmente le volume de la conduite hydraulique (104) lorsque la fonction d'antiblocage est activée,
dans lequel il est prévu un entraînement linéaire (110) avec une barre d'induit (105) et un mouvement de déplacement de la barre d'induit (105) provoque l'ouverture de l'accumulateur volumique (20),
dans lequel l'élément faisant ressort (106) s'appuie au moins indirectement au carter (101) et à la barre d'induit (105),
dans lequel l'élément faisant ressort (106) est agencé dans la barre d'induit (105),
**caractérisé en ce qu'**il est prévu un piston de commande (113) qui se dresse dans la barre d'induit (105), qui est relié de manière fixe au carter (101) et auquel l'élément faisant ressort (106) s'appuie.

2. Modulateur de pression selon la revendication 1, **caractérisé en ce que** le modulateur de pression (100) comporte exactement un joint d'étanchéité dynamique (115).

3. Modulateur de pression selon l'une quelconque des revendications précédentes, **caractérisé en ce que** le piston de commande (113) est réalisé sous forme de corps creux.

4. Modulateur de pression selon l'une quelconque des revendications précédentes, **caractérisé en ce que** le piston de commande (113) est relié à une évacuation de liquide (116) pouvant être fermée.

5. Modulateur de pression selon l'une quelconque des revendications précédentes, **caractérisé en ce que** la barre d'induit (105) est agencée dans la conduite hydraulique (104) de manière à pouvoir être entourée de fluide hydraulique.

6. Modulateur de pression selon l'une quelconque des revendications précédentes, **caractérisé en ce que** la barre d'induit (105) comporte au moins un évidement pour fluide hydraulique, en particulier au niveau de sa surface enveloppante au moins une gorge qui s'étend dans le sens de la longueur de la barre d'induit (105) ou en forme d'hélice (130).

7. Modulateur de pression selon l'une quelconque des revendications précédentes, **caractérisé en ce qu'**un dispositif à soupape (18) actionnable par la barre d'induit (115) est prévu dans la conduite hydraulique (104).

8. Modulateur de pression selon l'une quelconque des revendications précédentes, **caractérisé en ce qu'**un circuit électronique (121) est agencé dans le carter (101).

9. Modulateur de pression selon l'une quelconque des revendications précédentes, **caractérisé en ce qu'**un capteur de pression (122) détectant la pression dans l'accumulateur volumique (20) est prévu.

10. Modulateur de pression selon les revendications 8 et 9, **caractérisé en ce que** le capteur de pression (122) est agencé sur une carte (125) comportant le circuit électronique (121).

11. Modulateur de pression selon au moins l'une quelconque des revendications précédentes 8 ou 10, **caractérisé en ce que** la conduite hydraulique (104) passe à travers le circuit électronique (121).

12. Système de freinage hydraulique (10) avec fonction d'antiblocage, comprenant un maître-cylindre (12) qui produit la pression hydraulique et qui est relié pour la communication hydraulique à un frein de roue (16) par l'intermédiaire d'une conduite hydraulique (14) dans laquelle est agencé un modulateur de pression (100) selon l'une quelconque des revendications précédentes.
